# EUROPEAN PATENT APPLICATION

(11) **EP 1 211 530 A2**
(43) Date of publication of application: **05.06.2002**
(21) Application number: 01127483.4
(22) Date of filing: 28.11.2001
(51) Int. Cl.: G02B 6/122, G02B 6/26

(54) **Optical coupling device with anisotropic light-guiding member**

(30) Priority: 30.11.2000 JP 2000364270
(71) Applicant: JAPAN AVIATION ELECTRONICS INDUSTRY, LIMITED, Shibuya-ku, Tokyo 150-0043 (JP)
(72) Inventor: Ukechi, Mitsuo, Japan Aviation Elec. Ind. Ltd., Tokyo 150-0043 (JP)
(74) Representative: Hoffmann, Eckart, Dipl.-Ing.

(57) **Abstract**

An optical coupling device in which there is interposed between plural optical elements, such as single-mode optical fibers or laser diodes, an anisotropic light guiding member formed by a periodic two- or three-dimensional arrangement of two or more kinds of dielectric materials of different dielectric constants to develop a photonic band gap to inhibit the propagation of light in directions except a particular one.

## Description

### BACKGROUND OF THE INVENTION

The present invention relates to an optical coupling device with an anisotropic light-guiding member and, more particularly, to an optical coupling device using a photonic crystal that propagates light with low loss only in a particular direction.

In the field of optics various optical elements are used effectively for particular purposes according to their physical properties as listed below.

Glass: Transmits light with low loss.

Lens: Converges diffused light and achieves a high coupling efficiency, or diffuses incident light.

Fiber optic plate: Formed by a fiber matrix of a reduced diameter of several micrometers produced by drawing a bundle of optical fibers and slicing it at right angles to its lengthwise direction. This plate guides light only in the direction at right angles to the plate, that is, has an anisotropic light guiding property.

Optical waveguide: Formed by surrounding a light propagation path of a high refractive index material with a low refractive index material. This optical waveguide confines therein light and guides it in a particular direction.

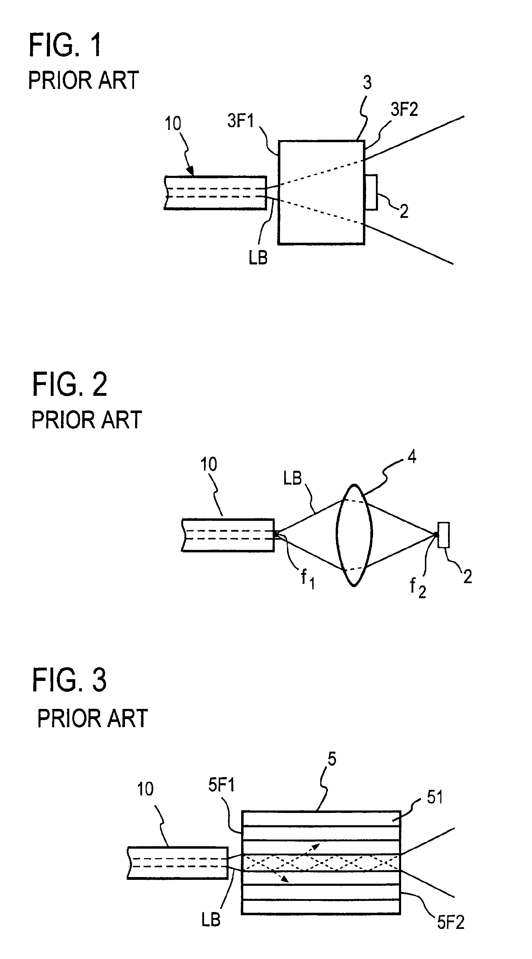

Referring first to Fig. 1, a prior art example will be described below. A glass block with parallel planes of incidence and emittance transmits therethrough light incident on one of its end faces with a relatively low loss and emits or radiates it from the other end face, but has no directionality in its propagation characteristic because of its isotropy. When a light beam LB radiating from a single-mode optical fiber 10 with a divergence angle is incident on the one end face 3F1 of a glass block 3, the light beam LB propagates in the glass block 3 while diverging and reaches the other end face 3F2 of the glass block 3 with the enlarged beam diameter. That is, even if light of a small beam cross section is incident on the one end face 3F1 of the glass block 3, it reaches the other end face 3F2 with an increased beam cross section when the incident light has a divergence angle; consequently, the light coupling efficiency between the single-mode optical fiber 10 and a light receiving element positioned on the other end face 3F2 is impaired by the increased beam cross section. After all, it can be said that the glass block has limited suitability as a material for optical coupling between optical elements.

Fig. 2 depicts another prior art example. A lens 4 is capable of converging a light beam, and hence it achieves a high coupling efficiency. That is, the light beam LB radiated from the end face of the single-mode optical fiber 10 with a divergence angle and impinging on the lens 4 while diverging from its one focal point f1 is refracted for convergence to the other focal point f2. Accordingly, placement of the light receiving element 2 at the position of the other focal point f2 of the lens 4 will provide a high optical coupling efficiency between the single-mode optical fiber 10 and the light receiving element 2. In this instance, the attainment of increased optical coupling efficiency calls for accurate alignment of the light receiving element 2 with the focal point f2 of the lens 4. Since defocusing, even if it is slight, causes a serious reduction in the optical coupling efficiency, much difficulty is encountered in the alignment of the light receiving element 2 with the focal point f2 for accurate focusing.

Fig. 3 shows still another prior art example. There is now placed on the market a fiber optic plate 5 produced by fusing and drawing a bundle of optical fibers with their gaps filled with a light absorbing material and cutting the optical fiber assembly to a desired thickness at right angles to its lengthwise direction. The fiber optic plate 5 has a property of guiding light lengthwise of optical fibers 51 forming the plate 5. That is, the light beam LB incident to the one end face 5F1 of the fiber optic plate 5 propagates therein only lengthwise thereof and reaches a light emitting end face 5F2, while light components diffusing in other directions than the lengthwise direction of the optical fibers 51 are absorbed by the light absorbing material filling the gaps between them and hence do not reach the light emitting end face 5F2. Accordingly, the fiber optic plate 5 does not involve the use of a lens for optical coupling between optical elements, and hence it eliminates the inconvenience of making adjustment for accurate focusing.

However, the fiber optic plate 5 allows leaky propagation or diffusion of light in the other directions than in the lengthwise direction of each optical fiber 51 but absorbs such leaky components of light by the light absorbing material interposed between the optical fibers 51 to thereby provide the anisotropic light guiding property; therefore, the fiber optic plate 5 inherently has the defect of high propagation loss. Further, the pitch of the fiber matrix of the commercially available fiber optic plate is also as large as several micrometers, and consequently, in the case of optical coupling between it and a single-mode optical fiber whose mode filed diameter (the emitted light beam diameter) is as small as 9.5 µm, the number of fibers of the plate 5 that are irradiated with the light beam emitted from the single-mode optical fiber is only three to five. Hence, when the position of incidence of the light beam from the single-mode optical fiber on the fiber optic plate 5 is shifted relatively to each other, the quantity of light emitted from the fiber optic plate 5 greatly changes in terms of the pitch of the fiber matrix. That is, to improve the optical coupling efficiency calls for positioning of the fiber optic plate and the single-mode optical fiber relative to each other. For this reason, the fiber optic plate is not suited for use with the single-mode optical fiber.

The afore-mentioned optical waveguide, though not shown, is able to of guide light in an S-shaped path as well as in a straight line, and it is also capable of branching light into Y-cut paths. As is the case with the lens, however, when the optical waveguide is used to couple optical elements, the coupling efficiency decreases unless light is incident on the light propagation path at a proper position; hence, assembling of the optical waveguide with the optical elements is time-consuming.

### SUMMARY OF THE INVENTION

It is therefore an object of the present invention to provide an optical coupling device with an anisotropic light-guiding component that is free from the above-mentioned problems of the prior art.

The optical coupling device according to the present invention comprises:
at least two optical elements; and
an anisotropic light-guiding member formed by a periodic two- or three-dimensional arrangement of two or more kinds of dielectric materials of different dielectric constants to develop a photonic band gap to inhibit the propagation of light in directions except a particular one, the anisotropic light guiding member being disposed between the at least two optical elements.

In the above optical coupling device, at least one of the two optical elements may be, for example, a single-mode optical fiber, laser diode, or light receiving element.

The dielectric materials of the anisotropic light-guiding member may be submicron in size and in the pitch of their periodic arrangement.

Further, the anisotropic light guiding member may be formed by periodically arranging a particular kind of dielectric material molded in spherical, columnar, prismatic or thin film form and filling their gaps with a different kind of dielectric material.

### BRIEF DESCRIPTION OF THE DRAWINGS

Fig. 1 is a diagram explanatory of an optical coupling scheme using a glass block;
Fig. 2 is a diagram explanatory of an optical coupling scheme using a lens;
Fig. 3 is a diagram explanatory of an optical coupling scheme using a fiber optic plate;
Fig. 4 is a diagram showing a three-dimensional photonic crystal;
Fig. 5 is a diagram showing a two-dimensional photonic crystal;
Fig. 6 is a diagram showing a homogeneous body;
Fig. 7 is a graph showing the energy level of the homogeneous body;
Fig. 8 is a graph explanatory of a photonic band gap;
Fig. 9 is diagram explanatory of an embodiment of the present invention;
Fig. 10 is diagram explanatory of another embodiment of the present invention; and
Fig. 11 is diagram explanatory of still another embodiment of the present invention.

### DETAILED DESCRIPTION OF THE PREFERRED EMBODIMENTS

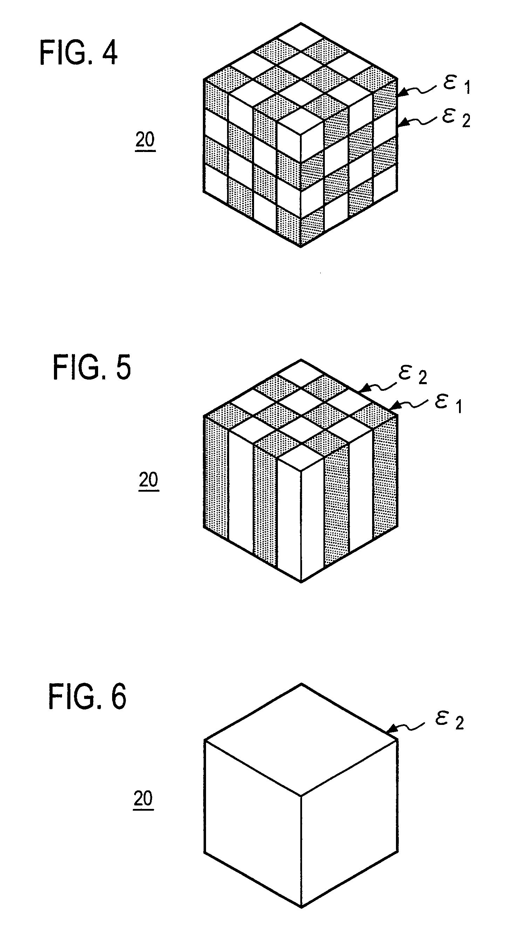

Fig. 4 is a diagrammatic representation of a photonic crystal 20 consisting of media of different dielectric constants ε₁ and ε₂ alternately arranged in a three-dimensional periodic pattern. Fig. 5 is a diagrammatic representation of a photonic crystal 20 consisting of media of different dielectric constants ε₁ and ε₂ alternately arranged in a two-dimensional periodic pattern.

The photonic crystals mentioned above are artificial crystal structures in which two kinds of transparent media of widely different refractive indices or dielectric constants are systematically arranged at intervals of the light wavelength or at shorter intervals in an alternately repeating pattern. The photonic crystals could be obtained by alternately arranging two kinds of transparent media of the dielectric constants ε₁ and ε₂ at intervals of hundreds to one-thousand-and-hundreds of nanometers. In such photonic crystals, light in a particular frequency range will not propagate in any direction. This frequency range is called a photonic band gap. The photonic crystal in the narrow sense is a crystal in which no light in a particular frequency range will propagate in any three-dimensional directions, that is, no light exists. In general, however, photonic crystals include those in which no light propagates only in particular directions. The tow- and three-dimensional photonic crystals are already developed and manufactured (see Nikkei Electronics, No. 730, p.57-63, September 16, 1998 and Japanese Patent Application Laid-Open Gazette 2000-258645).

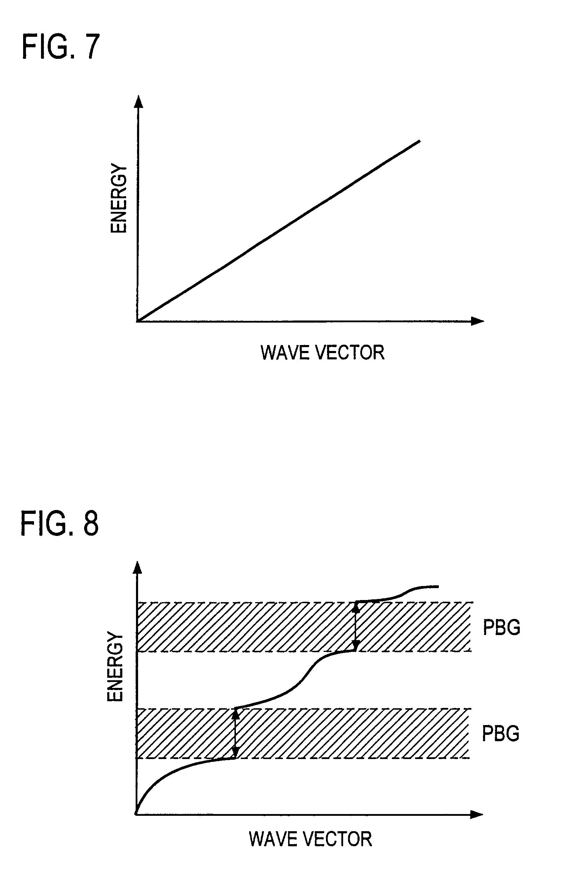

Fig. 6 shows a homogeneous medium object of the dielectric constant ε₂, whose energy level is continuous with respect to wave vector as depicted in Fig. 7. On the other hand, the energy levels of the photonic crystals formed by alternately arranging media of different dielectric constants ε₁ and ε₂ in a periodic repeating pattern, shown in Figs. 4 and 5, are not continuous with respect to wave vector. In particular, in a photonic crystal in which the sizes of the media of the dielectric constants ε₁ and ε₂ and the pitch of their alternate arrangement are set to 1/2 of the optical wavelength, the noncontinuity is large as depicted in Fig. 8. This noncontinuity, that is, the gap, is called a photonic band gap (PBG), which is a forbidden band where no light is allowed to exist theoretically as referred to above.

Let it be assumed that the photonic crystals 20 shown in Figs. 4 and 5 are perfect photonic crystals. By manipulating such a dielectric-constant periodic structure, it is possible to fabricate a two- or three-dimensional photonic crystal that has a continuous energy level only in a particular direction and forms photonic band gaps in any other directions to inhibit light propagation. Such a two- or three-dimensional photonic crystal could be implemented by removing part of the dielectric-constant periodic structure from one side of the crystal to the opposite side in a straight-line direction to form a waveguide that permits light propagation only in that straight-line direction. The light propagation loss is virtually zero in this waveguide.

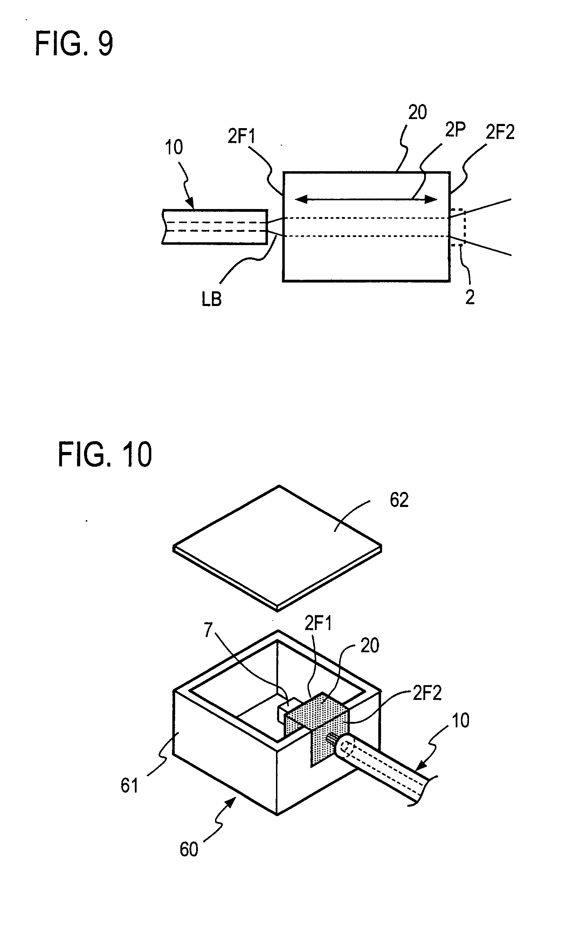

Next, a description will be given, with reference to Fig. 9, of an optical multiplexer with an anitsotropic light guiding member according to an embodiment of the present invention. The two- or three-dimensional anisotropic light guiding photonic crystal 20 has a waveguide 2 formed by removing its dielectric-constant periodic structure only in one straight-line direction. In this embodiment the light receiving element 2 is mounted on the light emitting end face 2F2 of the photonic crystal 20 on the side opposite the single-mode optical fiber 10. In Fig. 9 the light receiving element 2 is indicated by the broken line with a view to showing the divergence of light emitted from the light emitting end face 2F2.

The photonic crystal 20 transmits, in one direction, the light beam LB incident to its one end face 2F1 via the single-mode optical fiber 10 to the other end face 2F2 without diffusion during transmission. That is, the light beam incident to the end face 2F1 of the photonic crystal 20 propagates therein with substantially no diffusion and hence with an extremely low loss, and it is emitted from the end face 2F2 as a light beam of the same shape as that of the incident light beam LB on the end face 2F1. This produces the same effect as if the photonic crystal 20 does not exist as a propagation medium, that is, as if the light emitting end of the optical fiber 10 is present on the light emitting end face 2F2, thereby achieving a high optical coupling efficiency between the optical fiber 10 and the light receiving element 2.

Fig. 10 illustrates an embodiment of an optical package that is an optical device with an anisotropic light guiding member. In this case, too, the photonic crystal is the same as that used in Fig. 9. In Fig. 10, reference numeral 20 denotes an anisotropic light guiding window member embedded in one sidewall of a case 61 of an optical package 60, and 62 its lid. In the case 61 a laser diode 7 for emitting light beam is mounted on the inner vertical face 2F1 of the anisotropic light guiding window member 20. The single-mode optical fiber 10 is disposed with its one end face opposed to the outer vertical face 2F2 of the anisotropic light guiding window member 20.

In this instance, since the light propagation characteristic in the direction perpendicular to the vertical light-incidence face 2F1 of the anisotropic light guiding window member 20 is the same at any position on the face 2F1, there is no need for making adjustments for relative positioning between the laser diode 7 and the anisotropic light guiding window member 20 and between the anisotropic light guiding window member 20 and the light receiving end face of the single-mode optical fiber 10. That is, wherever the laser diode 7 is placed on the inner vertical face 2F1, light incident thereto propagates in the anisotropic light guiding member 20 in one direction while keeping the shape of the light beam on the light-incidence face 2F1 and reaches the light emitting end face 2F2.

Accordingly, by adjusting the position of the end face of the single-mode optical fiber 10 according to the point of arrival of light on the outer vertical face 2F2 of the anisotropic light guiding window member 20, the laser diode 7 and the light receiving end face of the single-mode optical fiber 10 are brought into alignment with each other. Accordingly, the laser diode 7 and the single-mode optical fiber 10 can be centered simply by adjusting their positions relative to each other without the need for taking into account the presence of the anisotropic light guiding window member 20.

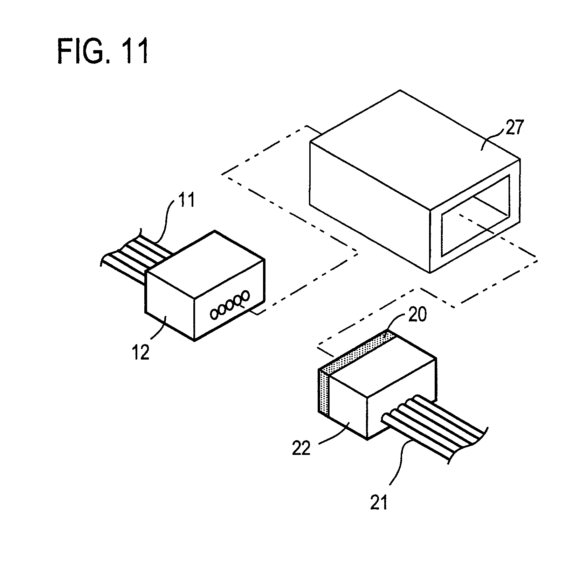

Fig. 11 illustrates an example in which the optical coupler of the present invention is applied to an optical connector. This example also uses, as the anisotropic light guiding member, the photonic crystal 20 used in the Fig. 9 example. In Fig. 11, reference numeral 11 denotes a first multi-conductor single-mode optical fiber, 12 a first ferrule for holding one end portion of the multi-conductor single-mode optical fiber 11 in position, 21 a second multi-conductor single-mode optical fiber having its tip end face coated with a filtering film, 22 a second ferrule for holding one end portion of the multi-conductor single-mode optical fiber 21 in position, 20 an anisotropic light guiding member mounted on one end face of the second ferrule 21, and 27 a sleeve. The first and second ferrules 13 and 22 are fitted or inserted into the sleeve 27 so that they are positioned relative to each other and optically coupled.

Let it be assumed that the filtering film coated all over the end face of the second multi-conductor single-mode optical fiber 21 cuts off and reflects light of a 1.31 µm wavelength but permits the passage therethrough of light of a 1.55 µm wavelength. With the first and second ferrules 12 and 22 coupled together by the connector, when signal light having the 1.31 µm and 1.55 µm wavelengths multiplexed is input from the first multi-conductor single-mode optical fiber 11 via the anisotropic light guiding member 20, the filter formed over the entire area of the end face of the second multi-conductor single-mode optical fiber 21 inhibits the passage therethrough of the light of the 1.31 µm but permits the passage therethrough of the light of the 1.55 µm wavelength for input into the second multi-conductor single-mode optical fiber 21.

At present, there is widely used an optical connector of the type that a filter for cutting off light of a particular wavelength is directly formed on one end face of a multi-conductor single-mode optical fiber. In the optical connector two multi-conductor single-mode optical fibers are repeatedly connected to and disconnected from each other, the repeated direct engagement of their end faces readily causes falling-off of the filter.

According to the present invention, the anisotropic light guiding member 20 formed of a photonic crystal is pasted on the second ferrule 22 that is one end face of the optical fiber 22, and that end portion of the optical fiber having the filter formed on its end face is inserted and fixed in the second ferrule 22. Accordingly, even if the first and second ferrules 12 and 22 are inserted into the sleeve 27 for abutment with each other, there is no fear of the filter falling off since it is protected by anisotropic light guiding member 20 and the second ferrule 22. And, since the anisotropic light guiding member 20 is interposed between the end face of the first multi-conductor single-mod optical fiber 11 and the filter-coated end face of the second multi-conductor single-mode optical fiber 21, it is possible to achieve optical coupling between the optical fibers 11 and 21 with a minimum of crosstalk between them.

### EFFECT OF THE INVENTION

As described above, the present invention uses, as the anisotropic light guiding member, a two- or three-dimensional photonic crystal formed by an arrangement of dielectric media that has a continuous energy level only in a particular direction and forms the photonic band gap in any other direction to inhibit light propagation; hence, the invention permits implementation of an optical coupler that achieves low-loss optical coupling between various optical elements as if no transmission medium exists.

## Claims

1. An optical coupling device comprising:
at least two optical elements; and
an anisotropic light-guiding member formed by a periodic two- or three-dimensional arrangement of two or more kinds of dielectric materials of different dielectric constants to develop a photonic band gap to inhibit the propagation of light in directions except a particular one, said anisotropic light guiding member being disposed between said at least two optical elements.

2. The device of claim 1, wherein at least one of said two optical elements is a single-mode optical fiber.

3. The device of claim 1, wherein at least one of said two optical elements is a laser diode.

4. The device of claim 1, wherein at least one of said two optical elements is a light receiving element.

5. The device of claim 1, 2, 3, or 4, wherein the sizes of said dielectric materials of said anisotropic light guiding member and the pitch of the periodic arrangement of said dielectric materials are submicron.

6. The device of claim 1, 2, 3, or 4, wherein said anisotropic light guiding member is formed by periodically arranging a particular kind of dielectric material molded in spherical, columnar, prismatic or thin film form and filling their gaps with a different kind of dielectric material.
